# EUROPÄISCHE PATENTSCHRIFT

(11) **EP 4 119 785 B1**
(45) Veröffentlichungstag und Bekanntmachung des Hinweises auf die Patenterteilung: **10.09.2025**
(21) Anmeldenummer: 22182101.0
(22) Anmeldetag: 30.06.2022
(51) Int. Cl.: F02M 21/02

(54) **KRAFTSTOFFEINSPRITZVORRICHTUNG FÜR EINE BRENNKRAFTMASCHINE, INSBESONDERE FÜR EINEN WASSERSTOFFVERBRENNUNGSMOTOR**
FUEL INJECTION DEVICE FOR A TURBOMACHINE, IN PARTICULAR FOR A HYDROGEN COMBUSTION ENGINE
DISPOSITIF D'INJECTION DE CARBURANT POUR UN MOTEUR À COMBUSTION INTERNE, EN PARTICULIER POUR UN MOTEUR À COMBUSTION D'HYDROGÈNE

(30) Priorität: 12.07.2021 CH 0700412021
(43) Veröffentlichungstag der Anmeldung: 18.01.2023
(73) Patentinhaber: Liebherr Machines Bulle SA, 1630 Bulle (CH)
(72) Erfinder: SEBA, Bouzid, 1632 Broc (CH); PURAN, Bakir, 1696 Vuisternens-en-Ogoz (CH)
(74) Vertreter: von Tietzen und Hennig, Nikolaus

(56) Entgegenhaltungen:
- EP-A1- 3 741 984
- WO-A1-2015/169684
- WO-A1-2018/072839
- WO-A1-2019/048134

## Beschreibung

Die Erfindung betrifft eine Kraftstoffeinspritzvorrichtung für eine Brennkraftmaschine umfassend wenigstens ein Rail, das Bestandteil zweier Kraftstoffpfade ist.

Aufgrund allgemeinhin bekannter Vorteile erfolgt bei Brennkraftmaschinen eine Kraftstoffzuführung in das Saugrohr bzw. in die Brennräume vielfach unter einem stark erhöhten Druck. Sieht das Motorkonzept Selbiges vor, verfügt die Brennkraftmaschine häufig einen als Rail bezeichneten Druckspeicher, dem zunächst der Kraftstoff zugeführt wird. Zumeist wird für eine Gruppe mehrerer oder alle Brennräume der Brennkraftmaschine ein gemeinsames Rail benutzt, welches sodann als Zentralbezeichnet wird.

Bei einem Anstieg der Soll-Abgabeleistung der Brennkraftmaschine wird die Öffnungsdauer des bestimmten Injektors, über den die aktuelle Kraftstoffzuführung in den jeweiligen Brennraum erfolgen soll, verlängert. Handelt es sich um eine Brennkraftmaschine der ein Flüssigkraftstoff zugeführt wird, hält sich auch bei einer verlängerten Einspritzdauer und damit einer erhöhten Kraftstoff-Abgabemenge aus dem Rail das hierdurch verursachte Absinken des Railsdrucks in gewissen Grenzen, was eine Kompensation in Bezug auf die Kraftstoffzuführungsrate ermöglicht.

Damit ein genaueres Einhalten der gewünschten Kraftstoffzumessung erzielt wird, kann diese zusätzliche Öffnungsdauer des Injektors wiederum den Zeitraum enthalten, der denjenigen Rückgang des Kraftstoffmassenstroms beinhaltet, der durch das Absinken des Raildrucks entsteht. Nach einer bestimmten Zeitdauer fördert die Railpumpe eine höhere Kraftstoffmenge, was auch beim Bestehenbleiben des erhöhten Kraftstoffverbrauches zu einer Wiedererreichung des Raildruck-Sollwertes führt. Üblicherweise fördert eine sich im Förderbetrieb befindende Railpumpe immer eine solche Kraftstoffmenge zum Rail, die zumindest geringfügig grösser als der Kraftstoffmomentanverbrauch der Brennkraftmaschine ist. Sofern der Raildruck seinen Sollwert erreicht oder bereits überschritten hat, wird die überschüssige Kraftstoffmenge aus dem Rail abgeleitet und in der Regel in den Kraftstoff-Primärtank zurückgeführt.

Da sich Flüssigkeiten wesentlich einfacher als Gase auf ein Druckniveau von einigen 10 bar bis hin zu vielen hundert bar verdichten lassen, zugleich eine deutlich höhere volumetrische Dichte als Gase aufweisen und die weit verbreiteten Flüssigkraftstoffe (Diesel und Diesel-ähnliche Kraftstoffe, Benzin, LPG etc.) unter atmosphärischem oder geringfügig höherem Druck bei Vorliegen üblicher Umgebungstemperaturen praktikabel in einem bezüglich seiner Ausführung und Handhabung einfach gestalteten Kraftstoff-Primärtank gespeichert werden können, sind die oben genannten Maßnahmen im Hinblick einer schnellen Steigerungsmöglichkeit der Kraftstoffzuführungsrate für die vorgenannten Kraftstoffe technisch noch vergleichsweise einfach umsetzbar. Mit anderen Worten: Unter der Voraussetzung einer bestehenden bzw. obligatorisch geforderten Kraftstoff-Hochdruckeinspritzung ist der Zusatzaufwand, um die Zuführung des Flüssigkraftstoffes innerhalb eines kurzen Zeitraums steigern zu können, vergleichsweise niedrig.

Eine schnelle Zunahme der mechanischen Abgabeleistung einer Brennkraftmaschine erfordert auch eine entsprechend dynamische Erhöhung der zuzuführenden Luftmenge. Sofern die Anforderung nach einem transienten Leistungsanstieg während einer Ausgangslage erfolgt, in der die momentane Luftzuführung in die Brennräume durch eine Androsselung im Luftpfad und/oder die Zumischung von Abgas begrenzt wird, ist zumindest eine gewisse Steigerung der Luftzufuhr relativ kurzfristig möglich. Ferner sind bestimmte Hilfsmittel bekannt mit denen die Luftzufuhr vergleichsweise kurzfristig und deutlich gesteigert werden kann, z.B. durch einen im Luftpfad integrierten elektrisch angetriebenen Verdichter.

Bei einer mit einem der oben genannten Flüssigkraftstoffe betriebenen Brennkraftmaschine ist deren Dynamik im Wesentlichen auf die begrenzte Steigerungsrate der Luftzuführung zurückzuführen. Hingegen kann für die Dynamik eines Gasmotors auch eine begrenzte Steigerungsrate der Kraftstoffzuführung ausschlaggebend sein. Anders ausgedrückt: Besteht für einen Gasmotor die Anforderung nach einer hohen Leistungsdynamik, genügt es nicht, lediglich das Augenmerk auf den Luftpfad zu richten. Ab einer bestimmten zu erzielenden Dynamik genügt es nicht mehr, dass nur der Luftpfad mit Hilfsmitteln ausgestattet wird, die eine hohe Steigerungsrate der Luftzufuhr ermöglichen, sondern vielmehr müssen auch im Kraftstoffpfad geeignete Maßnahmen ergriffen werden, welche eine hohe Steigerungsrate der Kraftstoffzufuhr ermöglichen. Letzteres wird umso wichtiger, je kleiner die Dichte des gasförmigen Kraftstoffes ist.

Sofern ein gasförmiger Kraftstoff im Primärtank nicht in Gasform, sondern bspw. in Flüssigform oder in einer chemischen Bindung gespeichert ist, kann eine sich im Rail befindende überschüssige Kraftstoffmenge auch nicht mehr in den Primärtank zurückgeführt werden bzw. eine Rückführung wäre sehr aufwendig und/oder wenig zweckmäßig.

Beim Auftreten eines hohen Anstiegs der Soll-Abgabeleistung eines Gasmotors ist zumindest vorübergehend das Verlängern der jeweiligen Öffnungszeiträume der Injektoren nur bedingt möglich, da ein "unerwartet" langes Öffnen der Injektoren zu einem deutlichen Abfall des Raildrucks führen würde. Würde die Öffnungszeit eines Injektors übermäßig verlängert werden, um die Kraftstoff-Mengenanforderung des aktuellen Einspritzvorgangs annähernd oder vollständig zu erfüllen, sinkt der Raildruck stark ab, wodurch für den nachfolgenden bzw. die nachfolgenden Einspritzvorgänge die Kraftstoffzuführungsrate rückläufig würde, obgleich diese bei einem geforderten Leistungsanstieg klarerweise zunehmend sein müsste.

Sofern der Primärtank des gasförmigen Kraftstoffes als Druckspeicher ausgeführt ist und der sich darin befindende Gasdruck den Raildruck-Sollwert um ein entsprechendes Mindestmaß überschreitet, ist eine schnelle Anhebung des Raildruckes einfach möglich. Sind jedoch keine weiteren Hilfsmittel zur Anhebung des Raildruckes vorgesehen, kann bei einem entsprechend hohen Sollwert ein vergleichsweise hoher Anteil des sich im Primärtank befindenden gasförmigen Kraftstoffes nicht genutzt werden.

Sofern der gasförmige Kraftstoff einen sehr niedrigen Siedepunkt aufweist und als Flüssiggas gespeichert ist, erfordert die Konditionierung des Kraftstoffes dessen starke Erwärmung. In einem solchen Fall schließt ein Anstieg des Kraftstoffbedarfes, d.h. eine Steigerung an verdichtetem gasförmigen Kraftstoff und zwar in Bezug auf das benötigte Druckniveau sowie auf die Menge, die Notwendigkeit einer zeitlich und örtlich abgestimmten Steigerung des Wärmeeintrages in den Kraftstoffzuführungspfad ein. Beispiele solcher Kraftstoffe sind Flüssigwasserstoff und verflüssigtes Erdgas.

Sofern der gasförmige Kraftstoff im Primärtank nicht in seiner Molekularform, sondern chemisch gebunden gespeichert ist, schließt eine erhöhte Bereitstellung von Kraftstoff in Bezug auf sein Druckniveau und seine Menge sämtliche Prozessschritte längs eines mehrstufigen Konditionierungspfades ein. Wenn es sich beispielsweise bei dem sich im Primärtank befindenden Kraftstoff um Wasserstoff, der wiederum in einem flüssigen organischen Wasserstoff-Träger (LOHC = Liquid Organic Hydrogen Carriers) gespeichert ist, muss diese Trägerflüssigkeit zunächst für einen Reformationsprozess konditioniert werden und diesen Konditionierungsprozess durchlaufen. Der daraus resultierende, molekulare Wasserstoff liegt dann bereits in Gasform vor und ist dann (nochmals) zu komprimieren, sofern das im Rail benötigte Druckniveau höher ist als das damit korrespondierende Druckniveau unter dem man den flüssigen organischen Wasserstoff-Träger dem Reformationsprozess zuführen kann, um den in einem entsprechenden Ausmaß verdichteten Wasserstoff zu erhalten.

Aus der WO 2015/169684 A1 ist bereits ein Einspritzsystem bekannt, dass einen zusätzlichen Kraftstoffspeicher zur Druckabsenkung des Einspritzsystems im Motorstillstand umfasst. Aus der WO 2019/048134 A1 ist ein Einspritzsystem für Flüssiggas bekannt, das ebenfalls auf einen zusätzlichen Gas-Speicher setzt. Während eines Kaltstarts soll hier Kraftstoff ausschließlich aus dem zusätzlichen Gas-Speicher übernommen werden, solange die Pumpe für die Gasaufbereitung noch nicht betriebsbereit ist. Aus der EP 3 741 984 A1 ist ein System bekannt, das unterschiedliche Kraftstoffspeicher für die Kraftstoffversorgung einer Saugrohreinspritzung sowie den Injektor einer Vorkammer vorhält. Die WO 2018/072839 A1 offenbart eine Möglichkeit zur Rekuperation nicht verbrannter Gase in einem zusätzlichen Kraftstoffspeicher. Eine weitere Vorrichtung zum Zuführen eines gasförmigen Kraftstoffes an einen Motor ist aus EP 3 885 640 A2 bekannt. Gasförmiger Kraftstoff kann hier wahlweise direkt aus einem Primärtank an ein Rail gefördert werden. Sinkt der Druck im Primärtank unter einen Schwellwert ab, so wird Druck des Kraftstoffes über einen Kompressor erhöht und einem Gaszwischenspeicher zugeführt, aus diesem dann eine Versorgung des Rails sichergestellt ist.

Die Aufgabe der vorliegenden Erfindung besteht darin, eine modifizierte Kraftstoffeinspritzvorrichtung zu schaffen, die sich durch einen apparativ einfachen Aufbau auszeichnet und eine energieeffiziente Möglichkeit zur schnellen Steigerung der Kraftstoffzuführungsrate bis hin zu der vorgesehenen Maximalrate in die Brennräume bietet.

Gelöst wird diese Aufgabe durch eine Kraftstoffeinspritzvorrichtung gemäß den Merkmalen des Anspruchs 1. Vorteilhafte Ausführungen der Kraftstoffeinspritzvorrichtung sind Gegenstand der abhängigen Ansprüche.

Erfindungsgemäß wird vorgeschlagen, die Einspritzvorrichtung um wenigstens einen Zusatz-Kraftstoffdruckspeicher zu ergänzen, dessen Innenvolumen über wenigstens ein Steuerventil mit dem wenigstens einen Rail in Verbindung steht. Im Fall, dass die Brennkraftmaschine über mehrere Brennräume verfügt, existiert bevorzugt ein sogenanntes Zentralrail über das sich der Kraftstoffpfad zur Versorgung mehrerer oder sämtlicher Brennräume erstreckt. Durch die Ventilansteuerung lässt sich die Fluidverbindung zwischen Zusatz-Kraftstoffdruckspeicher und Zentralrail bedarfsweise öffnen und schliessen. Dies eröffnet die Möglichkeit, dem Zentralrail kurzfristig, d.h. nahezu verzögerungsfrei, für einen begrenzten Zeitraum eine höhere Kraftstoffmenge zur Verfügung zu stellen. Bei geöffnetem Steuerventil wird das Zentralrail neben dem regulären Kraftstoffpfad aus dem Kraftstoff-Primärtank zusätzlich mit einer gewissen Kraftstoffmenge aus dem Zusatz-Kraftstoffdruckspeicher versorgt. Eine solche Parallelversorgung aus Kraftstoff-Primärtank und Zusatz-Kraftstoffdruckspeicher ist insbesondere für den Fall einer vergleichsweise hohen Steigerungsrate der gewünschten Kraftstoffzumessung sinnvoll. Durch die ergänzende Zuführung von Kraftstoff aus dem Zusatz-Kraftstoffdruckspeicher kann ein Druckabfall im Zentralrail vermieden bzw. reduziert werden, der ansonsten aufgrund der verlängerten Öffnungszeiten der Injektoren vorliegen bzw. in einem deutlich höheren Ausmass eintreten würde. Bei einem ausreichend hohen Kraftstoffvorrat im Zusatz-Kraftstoffdruckspeicher kann ein mögliches Kraftstoffdefizit solange ausgeglichen werden, bis der reguläre Kraftstoffpfad vom Kraftstoff-Primärtank in das Zentralrail auf die höhere Kraftstoffzuführung adaptiert wurde.

Mit der Erfindung lassen sich die bei Gasmotoren auftretenden eingangs erwähnten Probleme ausräumen. Aufgrund der besonders geringen volumetrischen Energiedichte von gasförmigem Wasserstoff und dem technisch hohen Aufwand einer Wasserstoffverdichtung, ergibt sich durch eine Anwendung der Erfindung bei Wasserstoffmotoren ein besonders hoher Nutzen. Eine erfindungsgemäße Einspritzvorrichtung bietet demzufolge zur Versorgung solcher Brennkraftmaschinen, die mit einem gasförmigen Kraftstoff betrieben werden, einen hohen Nutzen. Der Kraftstoff-Primärtank eignet sich zur Bereitstellung des Kraftstoffes, insbesondere von Wasserstoff, wobei der Kraftstoff im Primärtank in Flüssig- oder Gasform speicherbar sein kann. Bei Wasserstoffmotoren kann der Wasserstoff in (i) Molekularform oder (i) alternativ als ein in molekularform beigemischtes Gas zu einem anderen Brenngas z.B. Methan sein oder (iii) alternativ in einer derartigen chemisch gebundenen Form gespeichert sein, die eine sogenannte Wasserstoff-Reformation in demjenigen System bspw. einem Fahrzeug, in dem der Wasserstoffmotor betrieben wird, unter einem praktikablen Aufwand ermöglicht. Sofern der Wasserstoff einem anderen Kraftstoff bzw. einer anderen Kraftstoffkomponente in molekularform beigemischt ist, beträgt der Gewichtsanteil des Wasserstoffes mindestens 20 %, bevorzugt mindestens 40 % und ganz bevorzugt mindestens 60 %.

Als Zusatz-Kraftstoffdruckspeicher kommt bevorzugt ein vorgespannter Druckspeicher zum Einsatz. Denkbar ist die Verwendung eines Blasenspeichers.

In einer vorteilhaften Ausführung besteht zwischen dem Zusatz-Kraftstoffdruckspeicher sich lediglich über das Steuerventil erstreckende und ansonsten unmittelbare Verbindung mit dem Zentralrail. Insbesondere sollte die Fluidverbindung so kurz wie möglich gehalten werden, damit eine möglichst kurze Reaktionszeit vorliegt. Dies ist ausschlaggebend, um ein etwaiges Kraftstoffdefizit, welches durch einen starken Anstieg der Sollabgabemenge hervorgerufen werden kann, möglichst verzögerungsfrei ausgleichen zu können oder sogar zu verhindern und dadurch einen Druckabfall im Zentralrail gering zu halten bzw. idealerweise zu vermeiden. Ein besonders kurzer Leitungsweg zwischen dem Zentralrail und dem Zusatz-Kraftstoffdruckspeicher ergibt sich für den Fall, dass der Zusatz-Kraftstoffdruckspeicher direkt am Zentralrail oder zumindest in unmittelbarer Nähe des Zentralrails angeordnet ist. In einer vorteilhaften Ausführung erstreckt sich die Fluidverbindung zwischen dem Zentralrail und dem Zusatz-Kraftstoffdruckspeicher lediglich längs aufeinander ausgerichteter Öffnungen in den Gehäusewänden des Zentralrails und des Zusatz-Kraftstoffdruckspeichers. Das Steuerventil und etwaige Dichtungselemente können teilweise oder komplett in einem Gehäuse des Zusatz-Kraftstoffdruckspeichers oder des Zentralrails integriert sein.

Im einer Ausführungsform erstrecken sich sämtliche Gaspfade, die in Bezug auf den Zusatz-Kraftstoffdruckspeicher hinführend und wegführend sind, ausschließlich über das Zentralrail. Klarerweise erfolgt in diesem Fall die Kraftstoffzuführung in den Zusatz-Kraftstoffdruckspeicher über das Zentralrail. Bevorzugt besteht zwischen dem Zentralrail und dem Zusatz-Kraftstoffdruckspeicher eine einzige Fluidverbindung über die bei einem geöffneten Steuerventil Kraftstoff vom Zentralrail in den Zusatz-Kraftstoffdruckspeicher einströmen kann und bei entsprechend geänderten Druckverhältnissen Kraftstoff vom Zusatz-Kraftstoffdruckspeicher in das Zentralrail zuströmen kann. Sinnvollerweise erfolgt die Aufladung des Zusatz-Kraftstoffdruckspeichers bis zu einem vorgegebenen Gasdruck, wobei diese Aufladung durch das Öffnen des Steuerventils erst dann begonnen wird, wenn der Momentanverbrauch zur Abdeckung der Sollleistung der Brennkraftmaschine durch die alleinige Entnahme von Kraftstoff aus dem Primärtank abgedeckt werden kann. Nach erfolgtem Druckausgleich zwischen den beiden Kraftstoffmengen im inneren des Zentralrails und des Zusatz-Kraftstoffdruckspeichers kann bzw. wird das Steuerventil wieder geschlossen.

Klarerweise kann das Aufladen des Zusatz-Kraftstoffdruckspeichers auch dann portionsweise erfolgen, wenn zwischen zwei oder mehreren aufeinanderfolgenden Aufladevorgängen keine Kraftstoffentnahme aus dem Zusatz-Kraftstoffdruckspeicher erfolgt, wie es anhand eines einfachen Beispiels aufgezeigt werden kann:

Innerhalb eines bestimmten Zeitabschnitts liegt eine Betriebsphase vor, in der die Brennkraftmaschine in einer Größenordnung von bspw. ca. 50 % Volllast arbeitet und die momentane Kraftstoffzuführung bereits vollständig durch eine simultane Kraftstoffentnahme aus dem Primärtank abgedeckt werden kann. Sofern der Innendruck im Zusatz-Kraftstoffdruckspeicher geringer als der Raildruck ist, wird das entsprechende Steuerventil entsprechend betätigt, so dass nach einiger Zeit der im Zusatz-Kraftstoffdruckspeicher herrschende Druck den selben Wert wie der Raildruck aufweist. Im daran anschließenden Zeitabschnitts des Beispiels erfolgt eine Zunahme der von der Brennkraftmaschine abgeforderten Abgabeleistung, wobei dieser abgeforderte Anstieg entsprechend langsam ist, wodurch dieser Leistungserhöhung ohne eine Gasentnahme aus dem Zusatz-Kraftstoffdruckspeicher abgedeckt werden kann. Ab einer bestimmten Zunahme der Abgabeleistung der Brennkraftmaschine erfolgt eine Anhebung des Raildrucks, sodass sich das besagte Steuerventil öffnet, wodurch dem Zusatz-Kraftstoffdruckspeicher erneut eine gewisse Kraftstoffmenge zugeführt wird.

In einer der möglichen Umsetzungen der Erfindung genügt eine einfache und kostengünstige Ausführung des Steuerventils als ein einfaches Wegeventil, das lediglich zwei Schaltzustände aufweist und demnach keine kontinuierliche Änderung der Durchflussmenge ermöglicht. Die Ventilbetätigung kann durch einen Aktuator erfolgen, der bspw. auf einem Elektromagnet basiert. Die Einsatzumgebung macht eine räumliche Trennung und/oder Abschottung des Aktuators, insbesondere des elektrischen Teils, zu fluidführenden, d.h. der kraftstoffführenden Bauteile, insbesondere des Ventilteils notwendig.

Das Zentralrail kann mit wenigstens einem daran bzw. darin integrierten Innendrucksensor ausgestattet sein, um den aktuellen Raildruck zu überwachen und/oder Bestandteil einer Raildruckregelung sein. Es ist zweckmäßig, den Raildrucksensor möglichst geschützt vor einer möglichen Druckwelle innerhalb des Zentralrails anzuordnen, um die Erfassung repräsentativer Messwerte sicherzustellen. Insbesondere sollte der Drucksensor mit ausreichendem Abstand zur Eingangspassage des Fluidanschlusses des Zusatz-Kraftstoffdruckspeichers am Zentralrail positioniert sein.

Optional kann der Zusatz-Kraftstoffdruckspeicher mit einem eigenen physisch vorhandenen Innendrucksensor ausgestattet sein. Alternativ oder ergänzend kann der Zustand des Zusatz-Kraftstoffdruckspeichers auch durch Evaluierung der Messwerte des Raildrucksensors überwacht werden. Im einfachsten Fall kann bei Vorliegen eines geöffneten Steuerventils als Ersatzwert für den Innendruck im Zusatz-Kraftstoffdruckspeicher der momentan gemessene Druckwert des Raildrucksensors gewählt werden, wohingegen bei Vorliegen eines geschlossenen Steuerventils als Ersatzwert für den Innendruck des Zusatz-Kraftstoffdruckspeichers der jeweilige Endwert des Raildrucksensors zu dem Zeitpunkt unmittelbar vor dem bisher letztmaligen Schließen des Steuerventils Verwendung findet. Bevorzugt wird eine softwaregestützte Auswertung mehrerer Rohdaten-Abtastwerte herangezogen, um jeweils einen als relevant erachteten Raildruckwert zu erlangen, der dann für sämtliche weiteren Vorgänge inklusive ggf. bestehender Folgeberechnungen genutzt wird, die durch den Raildruck-Istwert beeinflusst werden sollen. Alternativ oder ergänzend bietet sich eine solche Vorgehensweise für die erlangten Rohmesswerte eines ggf. vorhandenen Drucksensors und/oder Temperaursensors etc. an, der im Inneren des Zusatz-Kraftstoffdruckspeicher installiert sein kann.

Die Kraftstoffeinspritzvorrichtung ist erfindungsgemäß mit einer Steuerung ausgestattet, die konfiguriert ist, das Steuerventil im Normalbetrieb der Brennkraftmaschine geschlossen zu halten. Die Steuerung ist ferner konfiguriert, ab einer bestimmten Steigerung der geforderten Soll-Kraftstoffzumessung das Steuerventil zu öffnen, d.h. wenn in Bezug auf die momentan vorliegende Kraftstoffzuführungsmenge die damit einhergehende Anstiegsrate über einem gewissen Schwellenwert liegt. Nach dem Öffnen des Steuerventils kann dieses über eine bestimmte Zeitdauer und/oder in Abhängigkeit gewisser Parameter - bspw. der zu substitutierenden Kraftstoffmenge, der Druckdifferenz in dem Rail und dem Zusatz-Kraftstoffdruckspeicher etc. -, geöffnet gehalten werden. Besser kann es sein, dass Steuerventil nicht ununterbrochen geöffnet zu halten, sondern in Abhängigkeit der vorgenannten und anderen Kriterien solange alternierend zu öffnen und zu schließen, d.h. das Steuerventil wird gemäß eines festen und vorzugsweise variabel definierbaren Taktes geschaltet. Der Schalttakt kann bevorzugt dynamisch festgelegt werden, insbesondere auf Grundlage ein oder mehrerer Motorbetriebsparameter und/oder Betriebsgrößen der Brennkraftmaschine. Von Relevanz kann in diesem Zusammenhang der aktuelle Raildruck und/oder die aktuelle Motordrehzahl bzw. Kurbelwellendrehzahl und/oder der Sollwert der aktuell durchführbaren Kraftstoffzumessung und/oder der Wunschwert für die aktuelle Kraftstoffzumessung sein.

Weiterhin optional kann die Steuerung die Koordination für das Aufladen des Zusatz-Kraftstoffdruckspeichers über das Zentralrail beinhalten. Insbesondere berücksichtigt die Steuerung dazu die jeweils aktuellen Innendrücke des Zusatz-Kraftstoffdruckspeicher und des Zentralrails und die momentan mögliche Kraftstoffförderrate in das Zentralrail. Ist der Innendruck im Zusatz-Kraftstoffdruckspeicher kleiner als der Innendruck im Zentralrail, kann das Steuerventil zum Druckausgleich zwischen Zusatz-Kraftstoffdruckspeicher und Zentralrail geöffnet werden. Sinnvollerweise wird dies in Abhängigkeit der aktuellen Last bzw. aktuell angeforderten Kraftstoffmenge unter Berücksichtigung der momentan möglichen Kraftstoffförderrate koordiniert, so dass durch ein momentanes Aufladen des Zusatz-Kraftstoffdruckspeichers die momentane Kraftstoffversorgung der Brennkraftmaschine nicht beeinträchtigt wird. Die Steuerung veranlasst spätestens dann das Schließen des Steuerventils, wenn ein Druckausgleich zwischen beiden Speichern erfolgt ist.

Mit der erfindungsgemäßen Kraftstoffeinspritzvorrichtung ist eine dynamische Steuerung der bereitstellbaren Kraftstoffzuführungsrate aus einem Zentralrail möglich. In Ergänzung kann zur Optimierung des Motorbetriebs auch eine Einflussnahme auf den Luftpfad der Brennkraftmaschine in Erwägung gezogen werden. Denkbar ist es bspw., dass die Steuerung, die das Öffnen und Schließen des Steuerventils koordiniert gegebenenfalls in einer erweiterten Koordination mit einer Überwachung des Luftpfades und Eingriffsmöglichkeiten in den Luftpfad das Steuerventil und/oder ein oder mehrere Aktuatoren im Luftpfad, wie bspw. eine Drosselklappe oder eine zuschaltbare Vorrichtung mittels derer eine Erhöhung der Ladeluftverdichtung erzielbar ist, steuert.

Weitere Vorteile und Eigenschaften der Erfindung sollen nachfolgend anhand eines in den Figuren dargestellten Ausführungsbeispiels näher erläutert werden. Es zeigen:
- Figur 1:: eine schematische Darstellung der erfindungsgemäßen Kraftstoffeinspritzvorrichtung für die Direkteinspritzung in eine Brennkraftmaschine,
- Figur 2:: eine schematische Darstellung der erfindungsgemäßen Kraftstoffeinspritzvorrichtung für den Fall einer Saugrohreinspritzung,
- Figur 3:: eine perspektivische Ansicht auf die Unterseite eines Luftverteilers mit angebautem Zentralrail und Zusatz-Kraftstoffdruckspeicher,
- Figur 4:: eine Rückansicht auf den Luftverteiler gemäß Figur 3,
- Figur 5:: eine Schnittdarstellung mit abgewinkelten Schnitt durch die Brennkraftmaschine mit angebautem Luftverteiler gemäß Figuren 3, 4 und
- Figur 6, 7:: vergrößerte Detailansicht der Schnittdarstellung gemäß Figur 5.

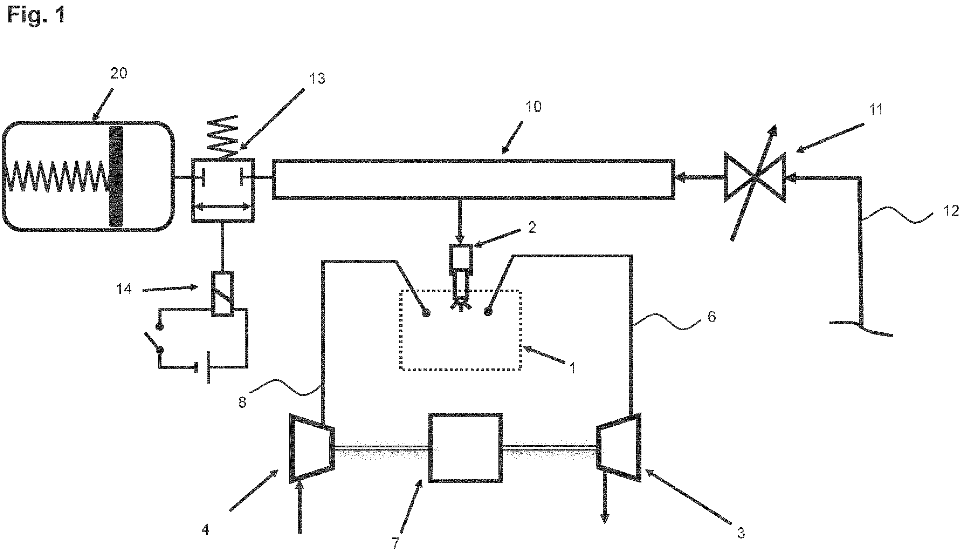

Figur 1 zeigt ein erstes Ausführungsbeispiel der Erfindung mit der erfindungsgemäßen Einspritzvorrichtung zur Direkteinspritzung in den Brennraum 1 einer Brennkraftmaschine. Vorliegend handelt es sich um einen Gasmotor, der mit Wasserstoff als Kraftstoff betrieben wird. Dazu liegt ein Injektor 2 vor, über den die erforderliche Kraftstoffmenge in den Brennraum 1 der Brennkraftmaschine einspritzt wird. Die Versorgung des Injektors 2 bzw. sämtlicher Injektoren der Brennkraftmaschine werden aus einem Zentralrail 10 bereitgestellt, das über ein mit dem Raildruck-Regelventil 11 versehenen primären Kraftstoffpfad 12 mit dem Kraftstoff-Primärtank (nicht dargestellt) in Verbindung steht. Neben dem Kraftstoff wird der Brennkraftmaschine über den Ladeluftpfad 8 die zur Verbrennung erforderliche Luftmenge zur Verfügung gestellt. Es handelt sich hierbei um eine aufgeladene Brennkraftmaschine. Die Turbine 3 wird durch den Abgasvolumenstrom im Abgaspfad 6 angetrieben und treibt den Kompressor 4 zur Verdichtung der Ladeluft im Ladeluftpfad 8 an. Als Unterstützung kann eine elektrische Maschine 7 vorhanden sein, um bei Bedarf einer schnellen Steigerung der verfügbaren Ladeluftmenge dem Kompressor 4 zusätzliche Antriebsleistung zuführen zu können.

Die erfindungsgemäße Idee sieht vor, dass dem Zentralrail 10 bei vorliegendem Normalbetrieb der Kraftstoff ausschließlich über den primären Kraftstoffpfad 12 zugeführt wird, jedoch im Fall einer gewissen Anstiegsrate der angeforderten Soll-Kraftstoffmenge für den Brennraum 1 allerdings eine zusätzliche Kraftstoffmenge aus einem separaten Zusatz-Kraftstoffdruckspeicher 20 bereitstellbar ist. Der Zusatz-Kraftstoffdruckspeicher 20, hier als vorgespannter Druckspeicher ausgeführt, ist über ein als 2/2 Wegeventil ausgeführtes Steuerventil 13 unmittelbar mit dem Zentralrail 10 fluidisch verbunden, wodurch auf möglichst kurzem Leitungsweg innerhalb einer kurzen Reaktionszeit eine zusätzliche Kraftstoffmenge bereitstellbar ist. Betätigt wird das Steuerventil 13 über einen Elektromagneten 14, der über einen Stößel auf das Steuerventil 13 einwirkt.

Unter der Voraussetzung, dass der Zusatz-Kraftstoffdruckspeicher 20 über eine gewisse Kraftstoffmenge verfügt, d.h. darin ein bestimmtes Druckniveau vorliegt, ist beim Auftreten eines starken Anstiegs der Soll-Abgabeleistung der Brennkraftmaschine ein Öffnen des Steuerventils 13 vorgesehen. Dadurch steht vorübergehend eine höhere Kraftstoffzuführungsrate bereit, die zeitlich unmittelbar den Brennräumen 1 zur Verfügung gestellt werden kann. Bei einem ausreichend hohen Kraftstoffvorrat im Zusatz-Kraftstoffdruckspeicher 20 kann das Auftreten eines Kraftstoff-Defizites solange ausgeglichen werden, bis sich die im primären Kraftstoffpfad 12 befindende Vorrichtung zur Bereitstellung von Kraftstoff aus dem Kraftstoff-Primärtank auf die benötigte höhere Kraftstoffzuführungsrate angepasst hat und sich daher das Auftreten eines Kraftstoffdefizites erübrigt hat.

Um den Aufwand der erfindungsgemäßen Vorrichtung möglichst gering zu halten, existiert bevorzugt keine gesonderte Einheit zum Befüllen des Zusatz-Kraftstoffdruckspeichers 20. Sodann erfolgt das Befüllen des Zusatz-Kraftstoffdruckspeichers 20 ausschließlich über das Zentralrail 10 bei geöffnetem Steuerventil 13. Das Steuerventil 13 bleibt im Normalbetrieb geschlossen und wird nur dann geöffnet, sofern dem Zusatz-Kraftstoffdruckspeicher 20 Kraftstoff über das Zentralrail 10 zugeführt werden soll oder sofern Kraftstoff aus dem Zusatz-Kraftstoffdruckspeicher 20 in das Zentralrail 10 zugeleitet werden soll oder der Zusatz-Kraftstoffdruckspeicher 20 aus Sicherheitsgründen über das Steuerventil 13 entladen werden soll. Das Steuerventil 13 sollte eine möglichst hohe Dynamik aufweisen und im geöffneten Zustand einen möglichst niedrigen Druckverlust erzeugen. Da das Steuerventil 13 während des Betriebs der Brennkraftmaschine überwiegend geschlossen ist, ist es energetisch vorteilhaft, wenn es bei einer Aktivierung des Elektromagneten 14 geöffnet ist.

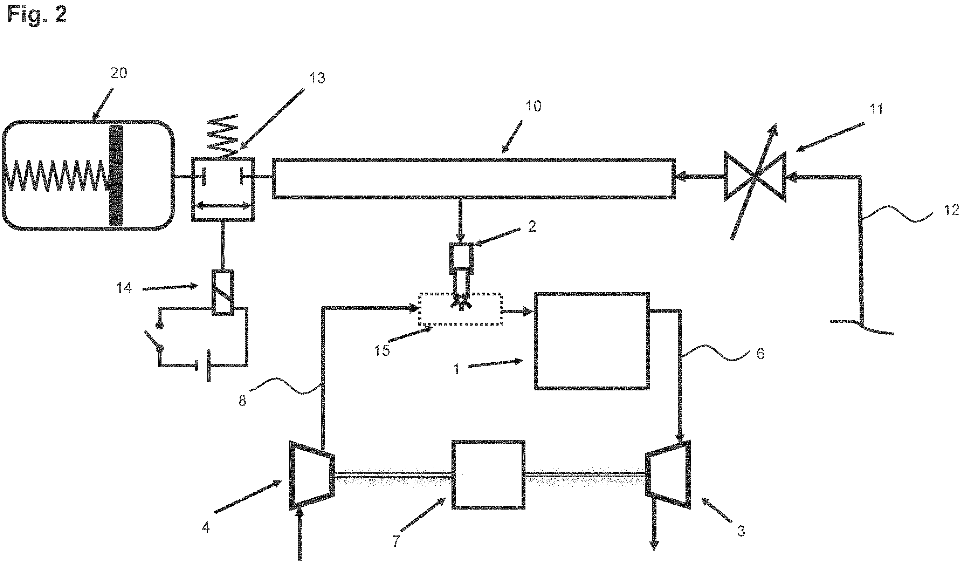

Abweichend von der Ausführung der Figur 1 lässt sich die aufgezeigte Kraftstoffeinspritzvorrichtung auch für eine Brennkraftmaschine mit Saugrohreinspritzung nutzen, wie dies in Figur 2 gezeigt ist. Im Unterschied zur Ausführung der Figur 1 wird hier der Kraftstoff durch den Injektor 2 in ein gemeinsames Saugrohr 15 mehrerer Brennräume 1 oder einen Einlasskanal des Brennraums 1 eingespritzt. Im Saugrohr 15 oder dem Einlasskanal wird das Kraftstoff-/Luftgemisch erzeugt und dem Brennraum 1 zugeführt.

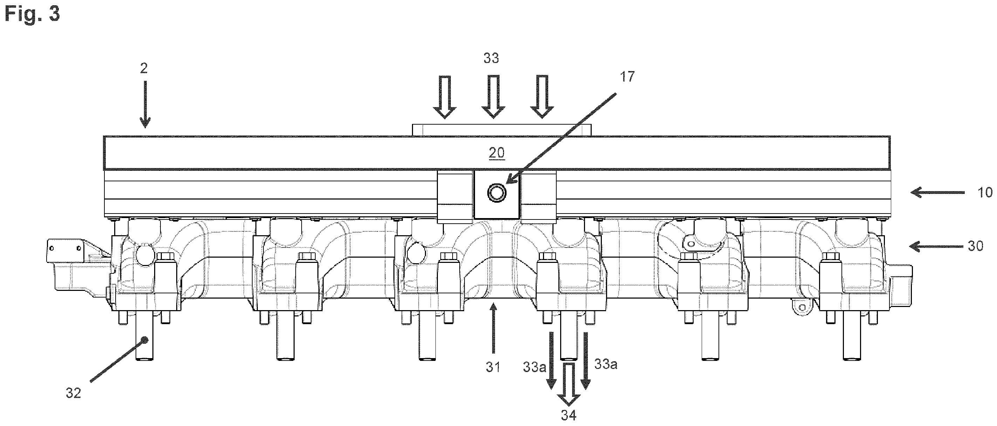

Figur 3 zeigt eine Unteransicht eines Luftverteilers 30 für eine Brennkraftmaschine. Der hier dargestellte Luftverteiler 30 wird mit seiner Seite 31 an der Brennkraftmaschine bzw. am Zylinderkopf 52 montiert und versorgt in der gezeigten Ausführung exemplarisch sechs Brennräume 1 der Brennkraftmaschine. Die Ladeluft strömt im Bereich um die zylinderindividuellen für die Kraftstoff Zuführungsröhren 32 aus dem Luftverteiler 30 in einen jeweiligen Einlasskanal 52a der Brennkraftmaschine bzw. des Zylinderkopfes 52, was hier exemplarisch mit dem Bezugszeichen 33a gekennzeichnet ist.

Die einzelnen Zuführungsröhren 32 dienen zur Kraftstoffversorgung in jeweils einen Einlasskanal 52a aus dem am Luftverteiler 30 unmittelbar befestigten Zentralrail 10. Mit dem Bezugszeichen 17 ist der Gasanschluss bzw. der Kraftstoffanschluss des Zentralrails 10 an den primären Kraftstoffpfad 12 eingezeichnet. Der angedeutete Kraftstoffaustritt aus einer Zuführungsröhre 32 ist exemplarisch mit einem Pfeil 34 dargestellt. Die zylinderindividuellen Zuführungsröhren 32 erstrecken sich jeweils beginnend von dem Ende des in das Zentralrail 10 hineinragenden Injektors 2 durch den Luftverteiler 30 hindurchgeführt bis in den Einlasskanal 52a hineinreichend. In der Figur 3 ist die Einbaulage des Injektoren 2 nur teilweise erkennbar, denn die sich außerhalb des Zentralrails 10 befindenden Bauteilenden der Injektoren 2 werden in dieser Ansicht durch den Zusatz-Kraftstoffdruckspeicher 20 verdeckt. Das Zentralrail 10 ist an der der Wand 31 gegenüberliegenden Gehäusewand des Luftverteilers 30 befestigt. Angegossene Buchsen am Zentralrail 10 dienen für die Verschraubung zwischen Luftverteiler 30 und Zentralrail 10. Mit dem Bezugszeichen 17 ist der Gasanschluss des Zentralrails 10 an den primären Kraftstoffpfad 12 eingezeichnet.

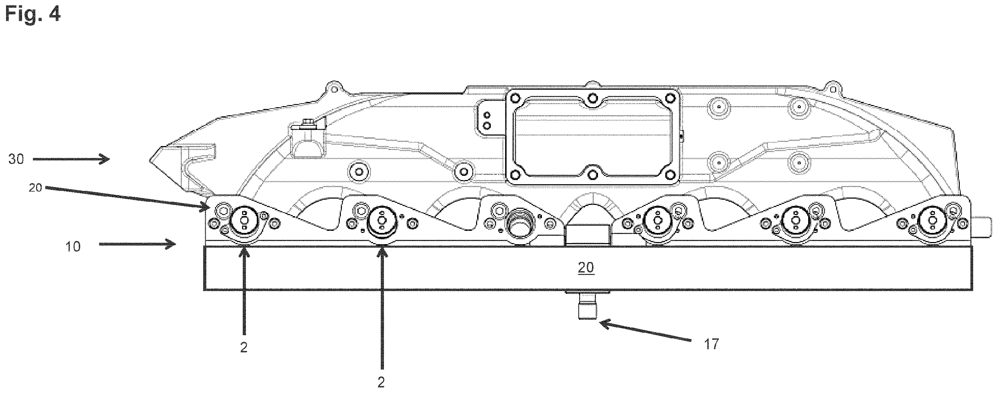

Hinter dem Zentralrail 10 ist der erfindungsgemäße Zusatz-Kraftstoffdruckspeicher 20 montiert. Erkennbar ist hier, dass sich die Fluidverbindung zwischen diesen beiden Innenvolumina längs entsprechend aufeinander ausgerichteter Öffnungen in den Gehäusewänden erstreckt. Die Darstellung der Figur 4 zeigt eine Ansicht des des Luftverteilers 30, die sich in Bezug auf einen angebauten Luftverteiler 30 von der Brennkraftmaschine abgewandt ist. In der Darstellung sind bislang nur fünf Injektoren 2 in die entsprechenden Montageöffnungen des Zentralrails 10 eingebaut, wobei der zweite Injektor von links lediglich an einem Einbauort platziert, jedoch noch nicht fixiert ist. Durch den unmittelbaren Anbau des Zusatz-Kraftstoffdruckspeichers 20 an das Zentralrail 10 werden die benötigten Fluidwege zwischen dem Zentralrail 10 und Zusatz-Kraftstoffdruckspeicher 20 auf ein Minimum reduziert, sodass im Falle eines hochdynamischen Anstiegs der geforderten Kraftstoffzuführungsmenge in die Brennräume 1 innerhalb einer sehr kurzen Zeitspanne eine zusätzliche Kraftstoffmenge aus dem Zusatz-Kraftstoffdruckspeicher 20 bereitgestellt werden kann.

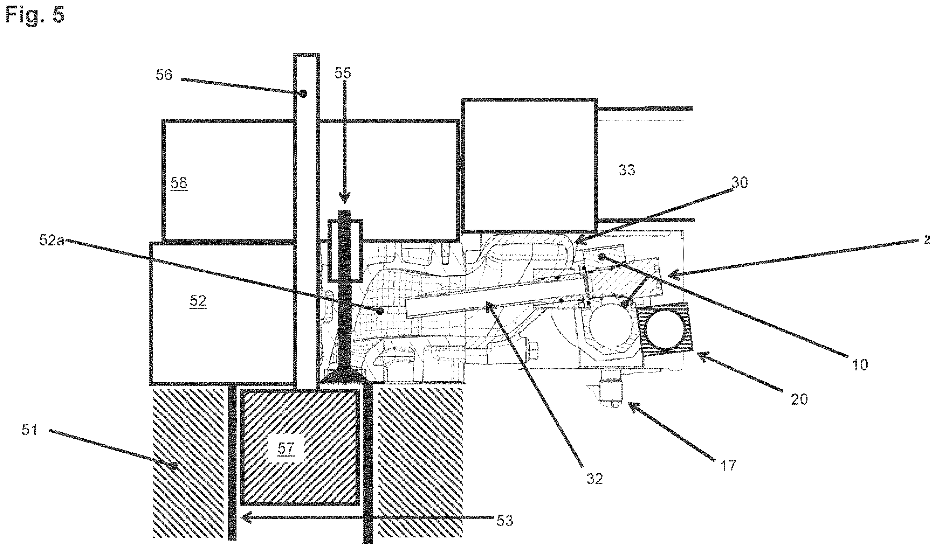

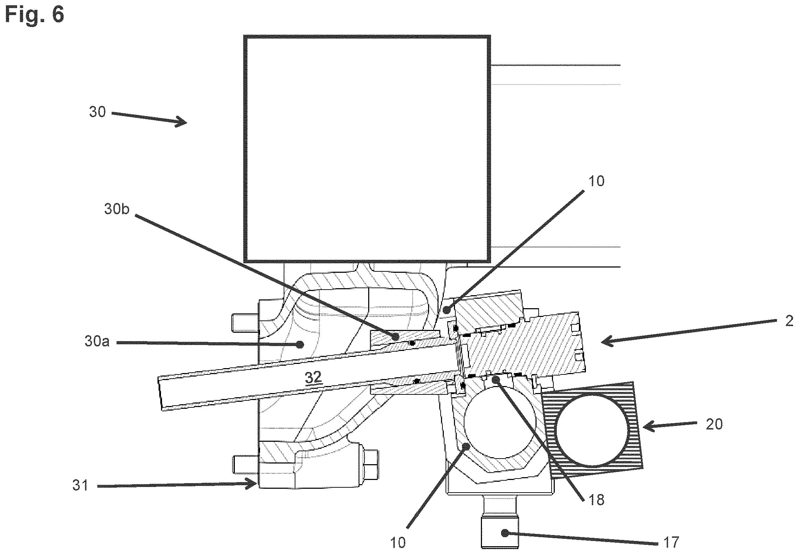

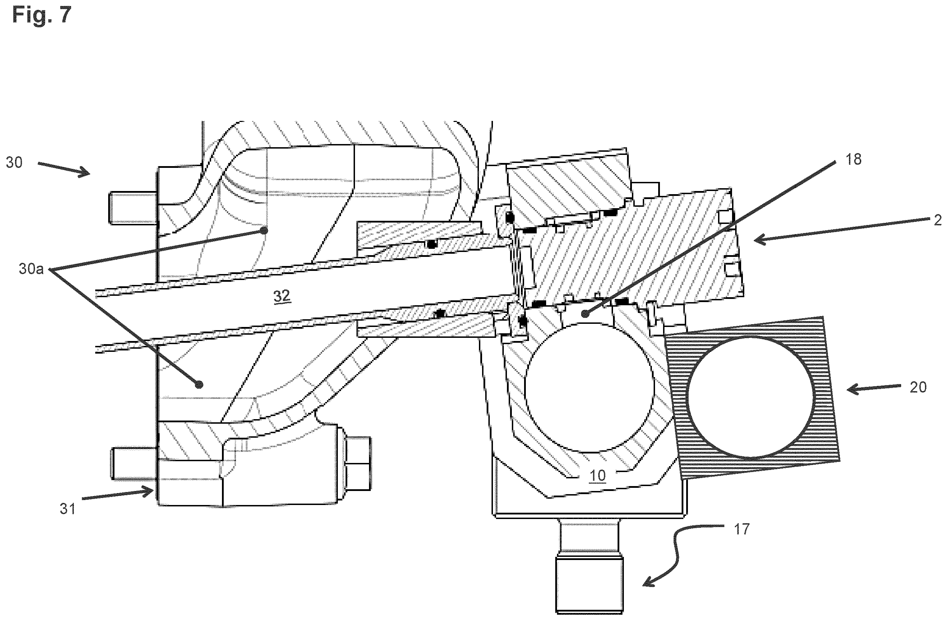

Bei den Figuren 5 bis 7 handelt es sich um Schnittdarstellungen des Ausführungsbeipiels, in denen die Anordnung und einige der Fluidverbindungen der besonders im Fokus stehenden Bauteile zu erkennen sind. Hierzu zählen das Zentralrail 10, der Zusatz-Kraftstoffdruckspeicher 20, der Luftverteiler 30 und ein Kraftstoffinjektor 2 sowie sein Hineinreichen in die im Zylinderkopf 52 vorhandenen Ausnehmung, die den dortigen Einlaskanal 52a bildet. Figur 5 zeigt hierbei einen Schnitt durch die Brennkraftmaschine, wobei für die Erfindung unwesentliche Teile nur schematisch dargestellt sind. Die Figur 5 dient jedoch zur Visualisierung des Ausführungsbeispiels in Bezug auf die Einbaulage des Luftverteilers 30, des Zentralrails 10 und des Zusatz-Kraftstoffdruckspeichers 20 an der Brennkraftmaschine. Die Figuren 6, 7 sind jeweilige Vergrößerungen des relevanten Schnittstellenbereichs.

Der Motorblock 51 beherbergt die Laufbuchse 53 und diese wiederum beherbergt den Kolben 57. Oberhalb des Zylinderkopfes 52 befindet sich der Zylinderkopfdeckel 58. Abgesehen von der angedeuteten Zündkerze 56 und einem Ventilstößel 55 sind die sich unterhalb des Zylinderkopfdeckels befindenden Bauteile nicht dargestellt, weil diese nicht im Fokus der Erfindung stehen. Mittels des Ventilstößels 55 wird der Strömungspfad des Luft-Kraftstoffgemisches entlang des Einlasskanals 52a bis zu dem Brennraum jeweils definiert geöffnet und geschlossen. In den vergrößerten Darstellungen ist noch die Fluidverbindung zwischen dem Innenvolumen des Zentralrails 10 und dem Injektor 2 zu erkennen. Der Injektor 2 weist im Bereich der Railöffnung 18 eine umlaufende Ringnut mit einer Reihe von Radialbohrungen auf, die in der Figur 7 erkennbar sind, durch die der Kraftstoff aus dem Zentralrail 10 in den Injektor 2 eindringen kann und über die Zuführungsröhre 32 in den Einlasskanal 52a eingespritzt werden kann.

Die Arbeitsweise der Erfindung wird nachfolgend anhand der möglichen Einsatzsituationen erklärt:

### Normalmodus:

Im Normalmodus arbeitet die Brennkraftmaschine bei geringer Dynamik, wobei die hierbei einsetzenden Anstiege des Kraftstoffbedarfs durch den im Zentralrail 10 vorhandenen Kraftstoffvorrat abgedeckt werden können. Sofern der Raildruck (um ein gewisses Maß) höher als der Innendruck im Zusatz-Kraftstoffdruckspeicher 20 ist, soll das Steuerventil 13 vorzugsweise im Stotterbetrieb jeweils geöffnet und geschlossen werden, bis der Raildruck seinen Sollwert erreicht hat und ein Ausgleich zwischen den im Zentralrail 10 und im Zusatz-Kraftstoffdruckspeicher 20 herrschenden Innendrücken vorliegt. Sobald diese Bedingung erfüllt ist, bleibt das Steuerventil 13 geschlossen.

### Übergang in den Sonderfall:

Ausgangssituation ist der Normalbetrieb, in dem die Brennkraftmaschine unter einer gewissen Last und einer begrenzten Dynamik arbeitet, wobei die hierbei einsetzenden Anstiege des Kraftstoffbedarfs durch den Verdichter 4 und den im Zentralrail 10 vorhandenen Kraftstoffvorrat abgedeckt werden können. Ferner weist der Gasdruck im Zusatz-Kraftstoffdruckspeicher 20 einen Wert oberhalb des Raildruckes auf. Aus dieser Ausgangssituation erfolgt ein transienter Anstieg der Soll-Abgabeleistung: Damit im Fall eines transienten Lastanstieges ein Absinken des Raildruck-Istwertes möglichst verhindert wird oder sogar eine Anhebung in Richtung des neuen Raildruck-Sollwertes möglich ist, soll Kraftstoff aus dem Zusatz-Kraftstoffdruckspeicher 20 durch das Öffnen des Steuerventils 13 in das Zentralrail 10 einströmen. Vorzugsweise führt dabei das Steuerventil 13 unmittelbar aufeinander folgende Öffnungs- und Schließbewegungen aus.

Eine genaue Koordination dieser Öffnungs- und Schließintervallzeiten des Steuerventil 13 wird von einer Aktuatorik umgesetzt, wobei die entsprechende Koordination bevorzugt durch eine Steuereinheit übernommen wird, die unter Kenntnis bestimmter Motorparameter und Betriebsgrößen von einer entsprechenden Aktuatorik vorgegeben werden kann. Beispiele solcher möglichen Betriebsgrößen sind der momentane Raildruck-Istwert, die Kurbelwellen-Istdrehzahl, der Sollwert der tatsächlich durchführbaren Kraftstoff-Einspritzung, der Wunschwert der Kraftstoff-Einspritzung (d.h. der Kraftstoffmenge unter deren Verfügbarkeit und Verwertbarkeit im Brennraum die angeforderte Abgabeleistung erbracht werden könnte) die Schalttaktung des Steuerventils 13 etc. Optional übernimmt die Steuereinheit oder eine weitere, mit ihr vernetzte Steuereinheit eine Koordination mit dem Betriebszustand der Luftstrecke unter Erfassung bestimmter Betriebsgrößen der Luftstrecke (z.B. dem Luftmassenstrom) und/oder unter Beeinflussung bestimmter Aktuatoren in der Luftstrecke (z.B. die Ansteuerung einer ggf. vorhandenen Drosselklappe oder einer Aktivierung des E-Motors 7 zur Erhöhung der Drehzahl des Kompressors 4, woraufhin eine Erhöhung des Ladeluft-Massenstroms eintritt).

Mit einer entsprechenden Software ausgestattet kann die Steuereinheit die Freiheitsgrade der Brennkraftmaschine unter den gegebenen Momentanbedingungen - exemplarisch können hier der Ist- und Sollbetriebspunkt der Drehzahl-Drehmomenten-Trajektorie, der Ist- und Sollwert des Raildruckes, der Istdruck im Zusatz-Kraftstoffdruckspeicher 20, der Betriebszustand des Luftpfades genannt werden - nutzen, um eine möglichst optimale Ausnutzung der im Zusatz-Kraftstoffdruckspeicher 20 verfügbaren Kraftstoffmenge zu erwirken.

Sofern nach dem Einschalten der Brennkraftmaschine der Zusatz-Kraftstoffdruckspeicher 20 nur noch sehr wenig Kraftstoff enthält - d.h. ein vergleichsweise niedriges Niveau des sich darin befindenden Kraftstoffes vorliegt - oder der Zusatz-Kraftstoffdruckspeicher 20 nur Umgebungsluft enthält, weil das Sicherheitskonzept eine Spülung mit Luft vorsieht, kann die Erfindung klarerweise noch nicht genutzt werden. Hier könnte vorgesehen sein, dass der Nutzer darauf hingewiesen wird, dass erst durch einen temporären Hochlastbetrieb, der ja nur von sehr kurzer Dauer zu sein braucht, die Funktionstüchtigkeit der Boostfunktion, d.h. die Funktionstüchtigkeit der Erfindung vorliegt.

Das erfindungsgemäße System eignet sich bevorzugt für den Einsatz von dynamisch betriebenen Gasmotoren und besonders bevorzugt für Wasserstoffmotoren. Alternativ oder ergänzend eignet sich das erfindungsgemäße System besonders bevorzugt für Gasmotoren, die in mobilen Anwendungen z.B. Straßenfahrzeuge, mobile Arbeitsmaschinen etc. zum Einsatz kommen.

Der Einsatz eines erfindungsgemäßen Systems ist deshalb für Wasserstoffmotoren besonders vorteilhaft, weil gasförmiger Wasserstoff im Vergleich zu allen anderen Kraftstoffen eine ganz besonders geringe volumetrische Energiedichte aufweist. Eine entsprechende Vergrösserung des Innenvolumens des Rails bzw. Zentralrails ist wiederum deshalb unvorteilhaft, weil bei einem Rückgang der von dem Wasserstoffmotor abgeforderten mechanischen Abgabeleistung und damit einem Absenken des Raildruckes die aus dem Rails zu entnehmende Wasserstoffmenge entsprechend grösser wird, die jedoch anders als bei Dieselkraftstoff, einem dieselähnlichen Kraftstoff etc. nicht einfach in den Kraftstoff-Primärtank zurückgeleitet werden kann.

Die Vorteile der Erfindung lassen sich wie folgt nochmals kurz zusammenfassen:
- Die erfindungsgemäße Erweiterung weist ein hohes Potenzial auf für eine schnelle Steigerung der Abgabeleistung bei einem vergleichsweise geringen
   - apparativen Mehraufwand
   - Zusatzgewicht
   - zusätzlichen Bauraumbedarf
   - Zusatzenergieverbrauch
- Die Erweiterung kann einfach an bestehende Systeme zur Kraftstoffversorgung angebaut werden, was eine Gleichteilstrategie (für Brennkraftmaschinen mit und ohne diese Zusatzausstattung begünstigt.
- Eine Modifikation anderer Komponenten und eine Ergänzung mit anderen Komponenten, die sich fernab der Brennkraftmaschine befinden, entfällt. (Lediglich eine elektrische Verkabelung und/oder eine hydraulische Verbindung, um eine Betätigung desjenigen Steuerventils 13 zu erwirken, welches die Fluidverbindung zw. dem Zentralrail 10 und dem Zusatz-Kraftstoffdruckspeicher 20 sperren und freigeben kann.)
- Die Erfindung kann unabhängig davon zur Anwendung kommen, in welcher Form der Kraftstoff in dem Primärtank gespeichert ist (z.B. in Flüssig- oder in Gasform oder in einer chemisch gebundenen Form) und auf welche Weise die Bereitstellung als Kraftstoff erfolgt (z.B. durch eine Verdampfung oder eine Reformation).

**Bezugszeichenliste:**

| | |
|---|---|
| Brennraum | 1 |
| Injektor | 2 |
| Turbine | 3 |
| Kompressor | 4 |
| Abgaspfad | 6 |
| E-Motor | 7 |
| Ladeluftpfad | 8 |
| Zentralrail | 10 |
| Raildruck-Regelventil | 11 |
| primärer Kraftstoffpfad | 12 |
| Steuerventil | 13 |
| Elektromagnet | 14 |
| Saugrohr | 15 |
| Gasanschluss | 17 |
| Railöffnung | 18 |
| Zusatz-Kraftstoffdruckspeicher | 20 |
| Luftverteiler | 30 |
| Innenvolumen des Luftverteilers | 30a |
| Führung | 30b |
| Befestigungswand Luftverteiler | 31 |
| Zuführungsröhre | 32 |
| Ladeluft (vor dem Einströmen in den Luftsammler) | 33 |
| Ladeluft (beim Einströmen in den Zylinderkopf) | 33a |
| Kraftstoff | 34 |
| Motorblock | 51 |
| Zylinderkopf | 52 |
| Einlasskanal | 52a |
| Laufbuchse | 53 |
| Einlassventil | 55 |
| Zündkerze | 56 |
| Kolben | 57 |
| Zylinderkopfdeckel | 58 |

## Patentansprüche

1. Kraftstoffeinspritzvorrichtung für die Versorgung mit gasförmigem Kraftstoff einer Brennkraftmaschine umfassend wenigstens ein Zentralrail (10), das mit wenigstens einem Primärkraftstofftank über einen primären Kraftstoffpfad in fluider Verbindung steht,
wobei wenigstens ein Zusatz-Kraftstoffdruckspeicher (20) vorgesehen ist, dessen Innenvolumen über wenigstens ein Steuerventil (13) mit dem Zentralrail (10) in Verbindung steht, um temporär eine simultane Kraftstoffversorgung des Zentralrails (10) aus dem Zusatz-Kraftstoffdruckspeicher (20) und dem Kraftstoff-Primärtank bereitzustellen,
wobei eine Steuerung vorgesehen und konfiguriert ist, das Steuerventil (13) in einem Normalbetrieb der Brennkraftmaschine geschlossen zu halten, so dass dem Zentralrail (10) der Kraftstoff ausschliesslich über den primären Kraftstoffpfad zugeführt wird und **dadurch gekennzeichnet,**
**dass**
die Steuerung weiterhin konfiguriert ist, das Steuerventil (13) zu öffnen, wenn eine Steigerung der geforderten Soll-Kraftstoffzumessung in Bezug auf die momentan im Normalbetrieb vorliegende Kraftstoffzuführungsmenge über einem Schwellwert liegt, so dass das Zentralrail (10) parallel aus dem Primärkraftstofftank und dem Zusatz-Kraftstoffdruckspeicher (20) mit Kraftstoff versorgt wird.

2. Kraftstoffeinspritzvorrichtung nach Anspruch 1, **dadurch gekennzeichnet, dass** der Kraftstoff-Primärtank zur Speicherung von molekularem Wasserstoff oder einem Kraftstoff, der zumindest einen Gewichtsanteil von molekularem Wasserstoff von mindestens 20 %, bevorzugt von mindestens 40 % und ganz bevorzugt von mindestens 60 %, oder einem flüssigen Wasserstoff-Träger dient und der Kraftstoff nach einer gegebenenfalls erforderlichen Aufbereitung mittels der Kraftstoffeinspritzvorrichtung in den mindestens einen Brennraum der (1) einer Brennkraftmaschine einspritzbar ist.

3. Kraftstoffeinspritzvorrichtung nach Anspruch 1 oder 2, **dadurch gekennzeichnet, dass** der Zusatz-Kraftstoffdruckspeicher (20) ein vorgespannter Druckspeicher ist, vorzugsweise ein Blasenspeicher.

4. Kraftstoffeinspritzvorrichtung nach einem der vorstehenden Ansprüche, **dadurch gekennzeichnet, dass** der Zusatz-Kraftstoffdruckspeicher (20) unmittelbar über das Steuerventil (13) mit dem Zentralrail (10) verbunden ist.

5. Kraftstoffeinspritzvorrichtung nach einem der vorstehenden Ansprüche, **dadurch gekennzeichnet, dass** der Zusatz-Kraftstoffdruckspeicher (20) an dem Zentralrail (10) angeordnet ist und/oder das Steuerventil (13) integraler Bestandteil des Zentralrails (10) und/oder des Zusatz-Kraftstoffdruckspeichers (20) ist.

6. Kraftstoffeinspritzvorrichtung nach einem der vorstehenden Ansprüche, **dadurch gekennzeichnet, dass** der Zusatz-Kraftstoffdruckspeicher (20) nur mit dem Zentralrail (10) in fluider Verbindung steht, insbesondere eine Aufladung und/oder Entladung des Zusatz-Kraftstoffdruckspeicher (20) nur über das Zentralrail (10) möglich ist.

7. Kraftstoffeinspritzvorrichtung nach einem der vorstehenden Ansprüche, **dadurch gekennzeichnet, dass** das Steuerventil (13) ein Wegeventil, insbesondere ein 2/2 Wegeventil ist.

8. Kraftstoffeinspritzvorrichtung nach einem der vorstehenden Ansprüche, **dadurch gekennzeichnet, dass** das Steuerventil (13) über einen Aktuator, insbesondere mittels eines Elektromagnets (14) bestätigbar ist, wobei der Aktuator räumlich getrennt und/oder abgeschottet von dem Steuerventil (13) angeordnet ist.

9. Kraftstoffeinspritzvorrichtung nach einem der vorstehenden Ansprüche, **dadurch gekennzeichnet, dass** das Zentralrail (10) wenigstens einen integralen Drucksensor umfasst, der vorzugsweise beabstandet zum Fluidanschluss des Zentralrails (10) mit dem Zusatz-Kraftstoffdruckspeicher (20) liegt, um den Drucksensor vor einer Druckwelle bei geöffneter Fluidverbindung zwischen Zentralrail (10) und Zusatz-Kraftstoffdruckspeicher (20) zu schützen.

10. Kraftstoffeinspritzvorrichtung nach einem der vorstehenden Ansprüche, **dadurch gekennzeichnet, dass** ein Drucksensor innerhalb des Zusatz-Kraftstoffdruckspeichers (20) angeordnet ist.

11. Kraftstoffeinspritzvorrichtung nach einem der vorstehenden Ansprüche, **dadurch gekennzeichnet, dass** die Steuerung weiterhin konfiguriert ist, das Steuerventil (13) zu öffnen, für den Fall, dass der Anstieg der angeforderten Kraftstoffmenge über einem Schwellwert liegt, insbesondere das Steuerventil (13) alternierend zu öffnen und zu schließen, und/oder das Steuerventil nur unter der weiteren Bedingung zu öffnen, dass der Zusatz-Kraftstoffdruckspeicher (20) über eine definierte Kraftstoffmenge verfügt, insbesondere ein darin bestimmtes Druckniveau vorliegt.

12. Kraftstoffeinspritzvorrichtung nach einem der vorstehenden Ansprüche, **dadurch gekennzeichnet, dass** die Steuerung weiterhin konfiguriert ist, dass Steuerventil (13) unter der Bedingung zu öffnen, dass der Druck im Zentralrail (10) größer ist als der Druck im Zusatz-Kraftstoffdruckspeicher (20), insbesondere der Druckunterschied einen definierten Wert übersteigt, und die Brennkraftmaschine im Normalbetrieb betrieben wird.

13. Kraftstoffeinspritzvorrichtung nach Anspruch 12, **dadurch gekennzeichnet, dass** die Steuerung konfiguriert ist, dass Steuerventil (13) zu schließen, wenn bei Vorliegen eines Aufladebetriebes des Zusatz-Kraftstoffdruckspeichers (20) ein Druckausgleich innerhalb des Zusatz-Kraftstoffdruckspeichers (20) und innerhalb des Zentralrail (10) erfolgt ist.

14. Kraftstoffeinspritzvorrichtung nach einem der vorstehenden Ansprüche, **dadurch gekennzeichnet, dass** die Steuerung konfiguriert ist, für die Ansteuerung des Steuerventils (13) ein oder mehrere Maschinenparameter und/oder Betriebsgrößen der Brennkraftmaschine, bspw. den Raildruck-Istwert und/oder die Kurbelwellen-Drehzahl und/oder den Sollwert der tatsächlich durchführbaren Kraftstoff-Einspritzung und/oder den Wunschwert der Kraftstoff-Einspritzung zu berücksichtigen.

15. Kraftstoffeinspritzvorrichtung nach einem der vorstehenden Ansprüche, **dadurch gekennzeichnet, dass** die Steuerung konfiguriert ist, gegebenenfalls in Verbindung mit wenigstens einer weiteren externen Steuerung, den Betriebszustand der Luftstrecke der Brennkraftmaschine zu überwachen und optional ein oder mehrere Aktuatoren der Luftstrecke, bspw. eine Drosselklappe, unter Berücksichtigung ein oder mehrerer Betriebsgrößen der Luftstrecke und/oder des Kraftstoffpfades zu steuern.

16. Brennkraftmaschine mit einer Kraftstoffeinspritzvorrichtung gemäß einem der vorstehenden Ansprüche.

## Claims

1. Fuel injection device for supplying gaseous fuel to an internal combustion engine, comprising at least one central rail (10) in fluid communication with at least one primary fuel tank via a primary fuel path,
wherein at least one additional fuel pressure accumulator (20) is provided, the internal volume of which is connected to the central rail (10) via at least one control valve (13) in order to temporarily provide a simultaneous fuel supply to the central rail (10) from the additional fuel pressure accumulator (20) and the primary fuel tank, wherein a control system is provided and configured to keep the control valve (13) closed in a normal operation of the internal combustion engine so that the fuel is supplied to the central rail (10) exclusively via the primary fuel path,
**characterized in that**
the control system is further configured to open the control valve (13) in the event that of the requested target fuel addition with respect to the fuel supply amount applied currently in the normal operation is above a threshold so that the central rail is supplied with fuel parallelly from the primary fuel tank and the additional fuel pressure accumulator (20).

2. Fuel injection device according to claim 1, **characterized in that** the fuel primary tank is used for storing molecular hydrogen or a fuel which has at least a weight proportion of molecular hydrogen of at least 20%, preferably of at least 40% and very preferably of at least 60%, or a liquid hydrogen carrier, and the fuel can be injected into the at least one combustion chamber of the an internal combustion engine (1) after any necessary preparation by means of the fuel injection device.

3. Fuel injection device according to claim 1 or 2, **characterized in that** the additional fuel pressure accumulator (20) is a preloaded pressure accumulator, preferably a bladder accumulator.

4. Fuel injection device according to any one of the preceding claims, **characterized in that** the additional fuel pressure accumulator (20) is directly connected to the central rail (10) via the control valve (13).

5. Fuel injection device according to any one of the preceding claims, **characterized in that** the additional fuel pressure accumulator (20) is arranged on the central rail (10) and/or the control valve (13) is an integral part of the central rail (10) and/or the additional fuel pressure accumulator (20).

6. Fuel injection device according to any one of the preceding claims, **characterized in that** the additional fuel pressure accumulator (20) is in fluid connection only with the central rail (10), in particular charging and/or discharging of the additional fuel pressure accumulator (20) is possible only via the central rail (10).

7. Fuel injection device according to any one of the preceding claims, **characterized in that** the control valve (13) is a directional control valve, in particular a 2/2 directional control valve.

8. Fuel injection device according to any one of the preceding claims, **characterized in that** the control valve (13) can be actuated via an actuator, in particular by means of an electromagnet (14), wherein the actuator is arranged spatially separate from and/or partitioned off from the control valve (13).

9. Fuel injection device according to any one of the preceding claims, **characterized in that** the central rail (10) comprises at least one integral pressure sensor, preferably spaced apart from the fluid connection of the central rail (10) with the additional fuel pressure accumulator (20), to protect the pressure sensor from a pressure wave when the fluid connection between the central rail (10) and the additional fuel pressure accumulator (20) is open.

10. Fuel injection device according to any one of the preceding claims, **characterized in that** a pressure sensor is arranged inside the additional fuel pressure accumulator (20).

11. Fuel injection device according to any one of the preceding claims, **characterized in that** the control system is further configured to open the control valve (13) in the event that the increase in the requested fuel quantity is above a certain threshold, in particular to alternately open and close the control valve (13), and/or open the control valve only under the additional condition that the additional fuel pressure accumulator (20) has a defined fuel quantity, in particular a pressure level defined therein prevails.

12. Fuel injection device according to any one of the preceding claims, **characterized in that** the control system is further configured to open the control valve (13) under the condition that the pressure in the central rail (10) is greater than the pressure in the additional fuel pressure accumulator (20), in particular the pressure difference exceeds a defined value, and the internal combustion engine is operated in the normal operation.

13. Fuel injection device of claim 12, **characterized in that** the control system is configured to close the control valve (13) when pressure equalization within the additional fuel pressure accumulator (20) and within the central rail (10) has occurred in the presence of a boost operation of the additional fuel pressure accumulator (20).

14. Fuel injection device according to any one of the preceding claims, **characterized in that** the control system is configured to take into account one or more engine parameters and/or operating variables of the internal combustion engine, for example the rail pressure actual value and/or the crankshaft speed and/or the setpoint value of the fuel injection which can actually be carried out and/or the desired value of the fuel injection, for actuating the control valve (13).

15. Fuel injection device according to any one of the preceding claims, **characterized in that** the control system is configured, optionally in conjunction with at least one further external control system, to monitor the operating state of the air path of the internal combustion engine and optionally to control one or more actuators of the air path, for example a throttle valve, taking into account one or more operating variables of the air path and/or the fuel path.

16. Internal combustion engine comprising a fuel injection device according to any one of the preceding claims.

## Revendications

1. Dispositif d'injection de carburant pour l'alimentation en carburant gazeux d'un moteur à combustion interne comprenant au moins une rampe centrale (10) qui est en communication fluidique avec au moins un réservoir de carburant primaire par l'intermédiaire d'un chemin de carburant primaire,
au moins un accumulateur de carburant sous pression auxiliaire (20) étant prévu, dont le volume intérieur est en communication avec la rampe centrale (10) par l'intermédiaire d'au moins une soupape de commande (13), afin de fournir temporairement une alimentation en carburant simultanée de la rampe centrale (10) à partir de l'accumulateur de carburant sous pression auxiliaire (20) et du réservoir de carburant primaire, une commande étant prévue et configurée pour maintenir la soupape de commande (13) fermée pendant un mode de fonctionnement normal du moteur à combustion interne, de telle sorte que le carburant soit amené à la rampe centrale (10) exclusivement par l'intermédiaire du chemin de carburant primaire, et
**caractérisé en ce que**
la commande est en outre configurée pour ouvrir la soupape de commande (13) lorsqu'une augmentation du dosage de carburant de consigne requis par rapport à la quantité amenée de carburant actuellement présente en mode de fonctionnement normal est supérieure à une valeur seuil, de telle sorte que la rampe centrale (10) est alimentée en carburant parallèlement à partir du réservoir de carburant primaire et de l'accumulateur de carburant sous pression auxiliaire (20).

2. Dispositif d'injection de carburant selon la revendication 1, **caractérisé en ce que** le réservoir de carburant primaire sert à stocker de l'hydrogène moléculaire ou un carburant qui contient au moins une proportion pondérale d'hydrogène moléculaire d'au moins 20 %, de préférence d'au moins 40 % et tout préférablement d'au moins 60 %, ou un vecteur d'hydrogène liquide, et le carburant peut être injecté dans l'au moins une chambre de combustion (1) d'un moteur à combustion interne après un traitement éventuellement nécessaire au moyen du dispositif d'injection de carburant.

3. Dispositif d'injection de carburant selon la revendication 1 ou 2, **caractérisé en ce que** l'accumulateur de carburant sous pression auxiliaire (20) est un accumulateur sous pression précontraint, de préférence un accumulateur à vessie.

4. Dispositif d'injection de carburant selon l'une quelconque des revendications précédentes, **caractérisé en ce que** l'accumulateur de carburant sous pression auxiliaire (20) est en communication directe avec la rampe centrale (10) par l'intermédiaire de la soupape de commande (13).

5. Dispositif d'injection de carburant selon l'une quelconque des revendications précédentes, **caractérisé en ce que** l'accumulateur de carburant sous pression auxiliaire (20) est agencé sur la rampe centrale (10) et/ou la soupape de commande (13) fait partie intégrante de la rampe centrale (10) et/ou de l'accumulateur de carburant sous pression auxiliaire (20).

6. Dispositif d'injection de carburant selon l'une quelconque des revendications précédentes, **caractérisé en ce que** l'accumulateur de carburant sous pression auxiliaire (20) n'est en communication fluidique qu'avec la rampe centrale (10), notamment une charge et/ou une décharge de l'accumulateur de carburant sous pression auxiliaire (20) n'est possible que par l'intermédiaire de la rampe centrale (10).

7. Dispositif d'injection de carburant selon l'une quelconque des revendications précédentes, **caractérisé en ce que** la soupape de commande (13) est un distributeur, notamment un distributeur 2/2.

8. Dispositif d'injection de carburant selon l'une quelconque des revendications précédentes, **caractérisé en ce que** la soupape de commande (13) peut être actionnée par un actionneur, notamment au moyen d'un électroaimant (14), l'actionneur étant agencé séparé et/ou isolé dans l'espace de la soupape de commande (13).

9. Dispositif d'injection de carburant selon l'une quelconque des revendications précédentes, **caractérisé en ce que** la rampe centrale (10) comprend au moins un capteur de pression intégré, de préférence situé à distance du raccord fluidique de la rampe centrale (10) avec l'accumulateur de carburant sous pression auxiliaire (20), afin de protéger le capteur de pression contre une onde de pression lorsque la communication fluidique entre la rampe centrale (10) et l'accumulateur de carburant sous pression auxiliaire (20) est ouverte.

10. Dispositif d'injection de carburant selon l'une quelconque des revendications précédentes, **caractérisé en ce qu'**un capteur de pression est agencé à l'intérieur de l'accumulateur de carburant sous pression auxiliaire (20).

11. Dispositif d'injection de carburant selon l'une quelconque des revendications précédentes, **caractérisé en ce que** la commande est en outre configurée pour ouvrir la soupape de commande (13) dans le cas où l'augmentation de la quantité de carburant requise est supérieure à une valeur seuil, notamment pour ouvrir et fermer alternativement la soupape de commande (13), et/ou pour ouvrir la soupape de commande uniquement à la condition supplémentaire que l'accumulateur de carburant sous pression auxiliaire (20) dispose d'une quantité de carburant définie, notamment qu'un niveau de pression défini est présent dans celui-ci.

12. Dispositif d'injection de carburant selon l'une quelconque des revendications précédentes, **caractérisé en ce que** la commande est en outre configurée pour ouvrir la soupape de commande (13) à condition que la pression dans la rampe centrale (10) soit supérieure à la pression dans l'accumulateur de carburant sous pression auxiliaire (20), notamment que la différence de pression soit supérieure à une valeur définie, et que le moteur à combustion interne fonctionne en mode de fonctionnement normal.

13. Dispositif d'injection de carburant selon la revendication 12, **caractérisé en ce que** la commande est configurée pour fermer la soupape de commande (13) lorsqu'en présence d'une opération de suralimentation de l'accumulateur de carburant sous pression auxiliaire (20), une compensation de pression a eu lieu à l'intérieur de l'accumulateur de carburant sous pression auxiliaire (20) et à l'intérieur de la rampe centrale (10).

14. Dispositif d'injection de carburant selon l'une quelconque des revendications précédentes, **caractérisé en ce que** la commande est configurée pour prendre en compte, pour la commande de la soupape de commande (13), un ou plusieurs paramètres de machine et/ou grandeurs de fonctionnement du moteur à combustion interne, par exemple la valeur réelle de la pression de rampe et/ou la vitesse de rotation du vilebrequin et/ou la valeur de consigne de l'injection de carburant réellement réalisable et/ou la valeur souhaitée de l'injection de carburant.

15. Dispositif d'injection de carburant selon l'une quelconque des revendications précédentes, **caractérisé en ce que** la commande est configurée, éventuellement en liaison avec au moins une autre commande externe, pour surveiller l'état de fonctionnement du trajet d'air du moteur à combustion interne et, en option, pour commander un ou plusieurs actionneurs du trajet d'air, par exemple un clapet d'étranglement, en tenant compte d'une ou plusieurs grandeurs de fonctionnement du trajet d'air et/ou du chemin de carburant.

16. Moteur à combustion interne avec un dispositif d'injection de carburant selon l'une quelconque des revendications précédentes.
